(19) **Europäisches Patentamt / European Patent Office / Office européen des brevets**

(11) **EP 3 734 496 A1**

(12) **EUROPEAN PATENT APPLICATION**
published in accordance with Art. 153(4) EPC

(43) Date of publication:
**04.11.2020 Bulletin 2020/45**

(21) Application number: **18894025.8**

(22) Date of filing: **13.08.2018**

(51) Int Cl.:
**G06K 9/00** (2006.01)

(86) International application number:
**PCT/CN2018/100249**

(87) International publication number:
**WO 2019/128254 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 CN 201711428999**

(71) Applicant: **Zhejiang Uniview Technologies Co., Ltd**
**Hangzhou, Zhejiang 310000 (CN)**

(72) Inventor: **ZHANG, Lei**
**Hangzhou, Zhejiang 310000 (CN)**

(74) Representative: **HGF**
**1 City Walk**
**Leeds LS11 9DX (GB)**

(54) **IMAGE ANALYSIS METHOD AND APPARATUS, AND ELECTRONIC DEVICE AND READABLE STORAGE MEDIUM**

(57) Provided are a method and apparatus for analyzing an image, an electronic device, and a readable storage medium. The method includes: obtaining an image to be analyzed, the image including a target object; segmenting the image based on a pre-configured full convolution network to obtain multiple regions of the target object; obtaining a minimum circumscribed geometric frame of each region; extracting a feature of a corresponding region of each minimum circumscribed geometric frame based on a pre-configured convolution neural network and connecting the features of the corresponding regions of the minimum circumscribed geometric frames to obtain a target object feature of the target object; and comparing the target object feature against an image feature of each image in a pre-stored image library and outputting an image analysis result for the image to be analyzed according to a comparison result. This effectively removes the environmental interference to obtain a more accurate image retrieval result, thereby providing clues for quickly locating and searching the target object.

FIG. 1

## Description

This application claims the priority of Chinese patent application No. 201711428999X entitled "IMAGE ANALYSIS METHOD AND APPARATUS, AND ELECTRONIC DEVICE AND READABLE STORAGE MEDIUM" and filed on December 26th, 2017 with China National Intellectual Property Administration, disclosure of which is incorporated herein by reference in its entirety.

## TECHNICAL FIELD

The present application relates to the technical field of image analysis and more particularly relates to a method and apparatus for analyzing an image, an electronic device, and a readable storage medium.

## BACKGROUND

In some application of image analysis, it is usually needed to quickly find the location where a specific object is present, the time when it occurs, and the like based on an image provided by a user or provided on site, for purposes of tracking the specific object. However, the process is generally susceptible to some environmental factors in a monitoring scenario, such as poor light, blockage, inaccurate detection, or other factors, leading to a low searching accuracy and making it difficult to determine the specific object.

## SUMMARY

To overcome at least one deficiency of the related art, one object of the present application is to provide a method and apparatus for analyzing an image, an electronic device, and a readable storage medium so as to effectively eliminate the environmental interference and obtain a relatively accurate image retrieval result, thereby providing clues for quickly locating and searching the target object.

An embodiment of the present application provides a method of analyzing an image, the method being applied to an electronic device and including the following operations:

obtaining an image to be analyzed, the image including a target object;

segmenting the image based on a pre-configured full convolution network to obtain a plurality of regions of the target object;

obtaining a minimum circumscribed geometric frame of each of the plurality of regions;

extracting a feature of a corresponding region of each minimum circumscribed geometric frame based on a pre-configured convolution neural network, and connecting the features of the corresponding regions of the minimum circumscribed geometric frames to obtain a target object feature of the target object; and

comparing the target object feature against an image feature of each image in a pre-stored image library, and outputting an image analysis result for the image to be analyzed according to a comparison result.

In an embodiment of the present application, the method further includes the following operations prior to obtaining the image to be analyzed:
configuring the full convolution network, by:

receiving an image sample set, the image sample set including a plurality of image samples; and

labelling a plurality of regions of a target object in each of the plurality of image samples, inputting labelled image sample into the full convolution network for training, to obtain a trained full convolution network.

In an embodiment of the present application, the method further includes the following operation prior to obtaining the image to be analyzed:
configuring the convolution neural network, by:

receiving an image sample set, the image sample set including a plurality of image samples; and

inputting each of the plurality of image samples into the convolution neural network for training by using a Softmax regression function, to obtain a trained convolution neural network.

In an embodiment of the present application, the operation of extracting the feature of the corresponding region of each minimum circumscribed geometric frame based on the pre-configured convolution neural network includes the following operations:
inputting image data in each minimum circumscribed geometric frame into the trained convolution neural network model for processing, and using a plurality of features obtained from a last layer of the convolution neural network model as the features of the corresponding regions of the minimum circumscribed geometric frames.

In an embodiment of the present application, the method further includes the following operations:
processing each image in the pre-stored image library through the full convolution network and the convolution neural network to obtain the corresponding image feature each image in the pre-stored image library.

In an embodiment of the present application, the operation of obtaining the minimum circumscribed geometric frame of each of the plurality of regions includes the following operations:

obtaining a minimum circumscribed rectangular frame of each of the plurality of regions; or

obtaining a minimum circumscribed circle of each of the plurality of regions.

In an embodiment of the present application, the operation of comparing the target object feature against the image feature of each image in the pre-stored image library and outputting the image analysis result for the image to be analyzed according to the comparison result includes the following operations:

calculating a cosine distance between the target object feature and the image feature of each image in the pre-stored image library; and

sequencing the images in the pre-stored image library based on their respective cosine distances to generate a sequencing result, the sequencing result being the image analysis result for the image to be analyzed.

In an embodiment of the present application, the cosine distance between the target object feature and the image feature of each image in the pre-stored image library is calculated by the following formula:

$$d\left(f_i, f_j\right) = \frac{\vec{f_i} \cdot \vec{f_j}}{\|f_i\|_2 \cdot \|f_j\|_2}$$

where $f_i$ and $f_j$ denote a feature extracted of image $i$ and a feature extracted of image $j$, respectively, $\|\cdot\|_2$ denotes a two norm, $d(\cdot)$ denotes the cosine distance between the target object feature and the image feature of each image in the pre-stored image library.

In an embodiment of the present application, sequencing the images in the pre-stored image library based on their respective cosine distances to generate the sequencing result is performed using the following sequencing formula:

$$Top_n(i) = \left\{ j \mid \underset{j \in \Omega}{sort}\left(d\left(f_i, f_j\right)\right) \right\}$$

where n denotes the number of images in the sequencing result, and $\Omega$ denotes the pre-stored image library.

An embodiment of the present application further provides an apparatus for analyzing an image, the apparatus being applied to an electronic device and including an obtaining module, a segmentation module, an acquisition module, an extraction module, and a comparison module.

The obtaining module is configured to obtain an image to be analyzed, the image including a target object.

The segment module is configured to segment the image to be analyzed based on a pre-configured full convolution network to obtain a plurality of regions of the target object.

The acquisition module is configured to obtain a minimum circumscribed geometric frame of each of the plurality of regions.

The extraction module is configured to extract a feature of a corresponding region of each minimum circumscribed geometric frame based on a pre-configured convolution neural network, and connect the features of the corresponding regions of the minimum circumscribed geometric frames to obtain a target object feature of the target object.

The comparison module is configured to compare the target object feature against an image feature of each image in a pre-stored image library, and output an image analysis result for the image to be analyzed according to a comparison result.

In an embodiment of the present application, the apparatus further includes a second training module, which is configured to configure the convolution neural network, by:

receiving an image sample set that comprises a plurality of image samples; and

inputting each of the plurality of image samples into the convolution neural network for training by using a Softmax regression function, to obtain a trained convolution neural network. In an embodiment of the present application, the extraction module is configured to input image data in each minimum circumscribed geometric frame into the trained convolution neural network model for processing, and use multiple features obtained from the last layer of the convolution neural network model as the features of the corresponding regions of the minimum circumscribed geometric frames.

In an embodiment of the present application, the apparatus further includes an image-library feature processing module, which is configured to process each image in the pre-stored image library through the full convolution network and the convolution neural network to obtain the corresponding image feature of each image in the pre-stored image library.

In an embodiment of the present application, the acquisition module is configured to obtain a minimum circumscribed rectangular frame of each of the plurality of regions, or obtain a minimum circumscribed circle of each of the plurality of regions.

In an embodiment of the present application, the comparison module is configured to calculate a cosine distance between the target object feature and the image feature of each image in the pre-stored image library, sequence the images in the pre-stored image library based on their respective cosine distances to generate a sequencing result, the sequencing result being the image analysis result for the image to be analyzed.

In an embodiment of the present application, the cosine distance between the target object feature and the image feature of each image in the pre-stored image library is calculated by the following formula:

$$d\left(f_i, f_j\right) = \frac{\vec{f_i} \cdot \vec{f_j}}{\|f_i\|_2 \cdot \|f_j\|_2}$$

where $f_i$ and $f_j$ denote a feature extracted of image $i$ and a feature extracted of image $j$, respectively, $\|\cdot\|_2$ denotes a two norm, and $d(\cdot)$ denotes the cosine distance between the target object feature and the image feature of each image in the pre-stored image library.

In an embodiment of the present application, sequencing the images in the pre-stored image library based on their respective cosine distances to generate the sequencing result is performed using the following sequencing formula:

$$Top_n\left(i\right) = \left\{ j \mid \underset{j \in \Omega}{sort}\left(d\left(f_i, f_j\right)\right) \right\}$$

wherein n denotes a number of images in the sequencing result, and $\Omega$ denotes the pre-stored image library.

An embodiment of the present application further provides an electronic device that includes a storage medium, a processor and an apparatus for analyzing an image.

The apparatus for analyzing an image is stored in the storage medium and includes software functional modules executable for the processor. The apparatus includes an obtaining module, a segment module, an acquisition module, an extraction module and comparison module.

The obtaining module is configured to obtain an image to be analyzed, the image including a target object.

The segment module is configured to segment the image to be analyzed based on a pre-configured full convolution network to obtain a plurality of regions of the target object.

The acquisition module is configured to obtain a minimum circumscribed geometric frame of each of the plurality of regions.

The extraction module is configured to extract a feature of a corresponding region of each minimum circumscribed geometric frame based on a pre-configured convolution neural network, and connect the features of the corresponding regions of the minimum circumscribed geometric frames to obtain a target object feature of the target object.

The comparison module is configured to compare the target object feature against an image feature of each image in a pre-stored image library, and output an image analysis result for the image to be analyzed according to a comparison result.

An embodiment of the present application further provides a readable storage medium, which stores a computer program, the computer program when executed causing the foregoing methods for analyzing an image to be performed.

Compared with the related art, the present application has the beneficial effects described below.

The present application provides a method and apparatus for analyzing an image, an electronic device and a readable storage medium. Firstly, an image to be analyzed is obtained, the image including a target object. Then, the image to be analyzed is segmented based on a pre-configured full convolution network to obtain a plurality of regions of the target object, and a minimum circumscribed geometric frame of each of the plurality of regions is obtained. After that, a feature of a corresponding region of each minimum circumscribed geometric frame is extracted based on a pre-configured convolution neural network, and the features of the corresponding regions of the minimum circumscribed geometric frames are connected to obtain a target object feature of the target object. Finally, the target object feature is compared against an image feature of each image in a pre-stored image library, and an image analysis result of the image to be analyzed is output according to a comparison result. This may effectively eliminate the environmental interference to obtain a more accurate image retrieval result, thereby providing clues for quickly locating and searching the target object.

## BRIEF DESCRIPTION OF DRAWINGS

To better illustrate the technical solutions that are reflected in the embodiments of the present application, the accompanying drawings to be used in description of the embodiments will be briefly described below. It is to be understood that the accompanying drawings merely illustrate part of embodiments of the present application and thus are not to be construed as limiting the present application, and those of ordinary skill in the art may obtain other accompanying drawings based on these accompanying drawings without paying creative efforts.

FIG. 1 is a flowchart illustrating a method of analyzing an image according to an embodiment of the present application.

FIG. 2 is a schematic view illustrating image segmentation according to an embodiment of the present application.

FIG. 3 is a schematic view illustrating the regional segmentation according to the related art.

FIG. 4 is a schematic view illustrating the regional segmentation according to an embodiment of the present application.

FIG. 5 is a flowchart illustrating the sub-steps included in step S250 of FIG. 1.

FIG. 6 is a block diagram illustrating an electronic device for implementing the preceding method of analyzing an image according to an embodiment of the present application.

Reference numerals: 100. Electronic device; 110. Storage medium; 120. Processor; 200. Apparatus for analyzing an image; 210. Obtaining module; 220. Segmentation module; 230. Acquisition module; 240. Extraction module; 250. Comparison module.

## DETAILED DESCRIPTION

In the implementation of the technical solutions according to the embodiments of the present application, the inventors of the present application found that there are mainly three types of image retrieval methods described below in the related art.

The first method includes performing sub-image division on an image to be searched to obtain multiple sub-images, performing image feature extraction on each designated sub-image among the multiple sub-images to obtain a feature vector of each designated sub-image, and for each image in an image library, determining the similarity between this image and the image to be searched based on not only feature vectors of various sub-images in each to-be-matched sub-image group of this image, but also the feature vector of each designated sub-image. However, according to the careful research by the inventors, in this solution, the process of simply dividing the image into multiple regions is easily interfered with by blockage, image misalignment and other factors such that the selected features of the image cannot be aligned, and the searching accuracy is affected.

Method 2 includes calculating a category feature and a self-encoding feature of an image to ensure the similarity of image searching results in image category, generating a low-level image encoding feature by using an automatic encoding algorithm to ensure the similarity of images in content, and mixing a self-encoding feature method to further fuse a classification feature and the self-encoding feature to reduce dimensions, so that the searching is faster and the searching results is more stable. However, according to the careful research by the inventor, in this solution, image retrieval is performed through the combination of the category feature and the coding feature, and dimension reduction is performs on features, but it is needed to extract two different features, thereby reducing the operability and limiting the application prospect of this solution.

Method 3 includes establishing a visual vocabulary dictionary, obtaining a visual saliency map by using a visual saliency feature fusion algorithm of an image, obtaining a foreground target image and a background region image of the image according to saliency map segmentation, extracting respective color features and texture features of the foreground target image and the background region image to perform image retrieval. However, according to the careful research by the inventor, in this solution, processes of obtaining the foreground and the background through the saliency map and extracting the color and texture features are easily interfered with by the background and a complex environment, and the process of establishing the visual vocabulary dictionary has a high complexity, so that the application prospect of this solution is limited.

The drawbacks of the solutions in the related art described above are found through the practical and careful research by the inventor. Therefore, not only the find process of the preceding problems, but also the solutions in the embodiments of the present application described below for the preceding problems should be the contributions of the inventor to the present application in the process of the present application.

In view of the preceding problems, the inventor of the present application provides the solutions described below. These solutions may effectively remove the environmental interference and obtain a more accurate image retrieval result, thereby providing clues for quickly locating and searching the target object.

The solutions in the embodiments of the present application will be described clearly and completely in conjunction with the drawings in the embodiments of the present application. Apparently, the embodiments described below are part, not all, of the embodiments of the present application. Generally, the components of the embodiments of the present application described and illustrated in the drawings herein may be arranged and designed through various configurations.

Therefore, the subsequent detailed description of the embodiments of the present application shown in the drawings is not intended to limit the scope of the present application, but merely illustrates the selected embodiments of the present application. Based on the embodiments of the present application, all other embodiments obtained by those skilled in the art without paying creative efforts should all fall in the scope of the present application.

It is to be noted that similar reference numerals and characters indicate similar items in the drawings described below, and therefore, once a particular item is defined in a drawing, the item needs no more definition and explanation in subsequent drawings.

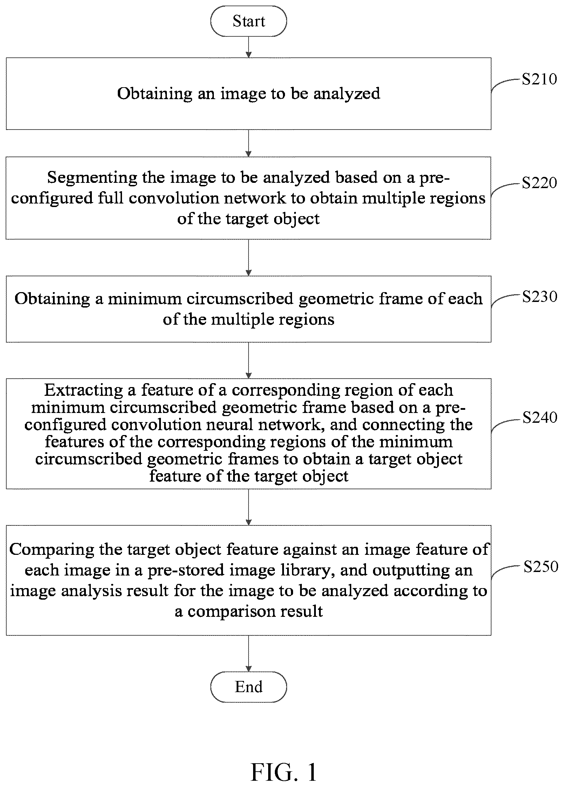

Referring to FIG. 1, a flowchart of a method of analyzing an image is provided according to an embodiment of the present application. It is to be noted that the method of analyzing an image in the embodiment of the present application is not limited by FIG. 1 and the specific sequence described below. The method may be implemented through the steps described below.

In step S210, an image to be analyzed is obtained.

In this embodiment, there is no limitation to the manner of obtaining the image to be analyzed. For example, the image to be analyzed may be obtained from a current shooting scene in real time by a monitoring device, or may be imported from an external terminal, or may be downloaded from a server. The image to be analyzed includes a target object. The target object is an object that needs feature analysis. For example, the target object may be a pedestrian or a specific article in an image.

In step S220, the image to be analyzed is segmented based on a pre-configured full convolution network to obtain a plurality of regions of the target object.

Specifically, before a further description of step S220, a configuration process of the full convolution network is to be described firstly. As an implementation, the full convolution network may be configured in the manner described below.

Firstly, an image sample set is received. The image sample set includes multiple image samples. Each image sample has an object target.

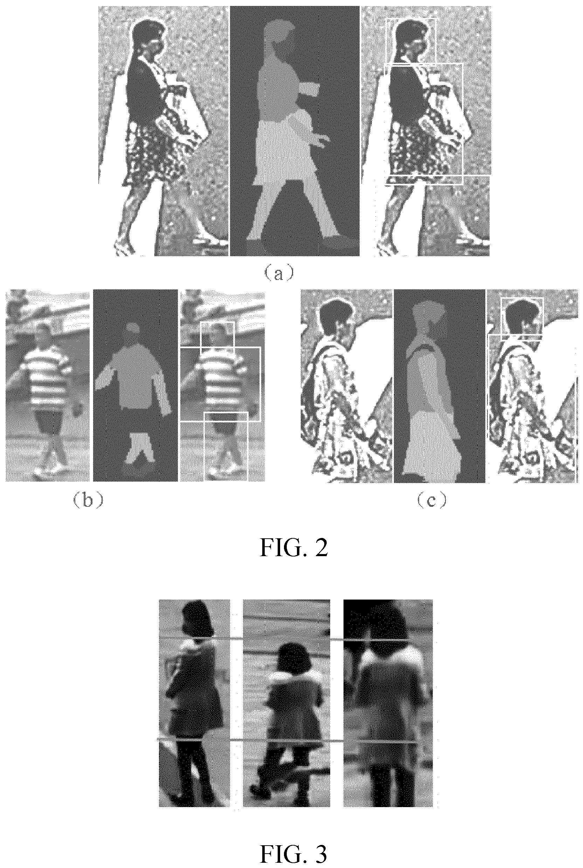

Then, various regions of the target object are labelled in each image sample, the multiple labelled image samples are input into the full convolution network to perform training, and the trained full convolution network is obtained. Specifically, for the example in which the target object is a pedestrian, each part of the body of the pedestrian, such as the head region, the upper body region and the lower body region (or more regions, such as the head region, the left arm region, the right arm region, the upper body region, the right leg region and the left leg region) may be labeled with different pixel values, and different pixel values correspond to different regions. As illustrated in FIGS. 2A to 2C, for each image group, the left is an original image sample, and the middle is labeled body regions. Then, the full convolution network (FCN) is trained by using labeled image samples, and the trained full convolution network with better Network parameters is obtained.

Based on the trained full convolution network, the image to be analyzed is input into the full convolution network and segmented to obtain a plurality of regions of the pedestrian.

In step S230, a minimum circumscribed geometric frame of each region is acquired.

Specifically, the pedestrian is segmented into different regions through the preceding full convolution network segmentation. To improve the recognition accuracy, it is necessary to remove the effect of the background image on the image data of each region as much as possible.

According to the careful research by the inventor, since each region has an irregular shape, the minimum circumscribed geometric frame of each region may be used as the data extraction range in this embodiment. The manner of obtaining the minimum circumscribed geometric frame of each region may be obtaining the minimum circumscribed rectangular frame of each region, or obtaining the minimum circumscribed circle of each region, or the like In an embodiment, the minimum circumscribed rectangular frame is used as an example. Referring to FIGS. 2A to 2C, in the right side of each image, various regions of the pedestrian are labeled with minimum circumscribed rectangular frames, so that the minimum circumscribed rectangular frames of the various regions are obtained. This may effectively remove background interference and other problems and provide accurate regions of the pedestrian.

Specifically, in this embodiment, an orthogonal coordinate system including an x axis and a y axis may be established for the to-be-recognized image. After each region of the target is identified, for each region, the coordinate values of pixels covered by this region in the orthogonal coordinate system are obtained. Among the coordinate values of the pixels, minimum value $x_{min}$ and maximum value $x_{max}$ on the x axis, and the minimum value $y_{min}$ and maximum value $y_{min}$ on the y axis are also obtained. Then, the rectangle composed of $(x_{min}, y_{min})$, $(x_{min}, y_{max})$, $(x_{max}, y_{min})$ and $(x_{max}, y_{max})$ is used as the minimum circumscribed rectangle of this region.

It is to be noted that the preceding minimum circumscribed geometric frame may take the form of any other regular geometric shape, and the minimum circumscribed rectangular frame is used in this embodiment preferably.

In step S240, a feature of a corresponding region of each minimum circumscribed geometric frame is extracted based on a pre-configured convolution neural network, and the features of the corresponding regions of the minimum circumscribed geometric frames are connected to obtain a target object feature of the target object.

Specifically, before a further description of step S240, a configuration process of the convolution neural network is to be described firstly. As an implementation, the convolution neural network may be configured in the manner described below.

Firstly, an image sample set is received. The image sample set includes multiple image samples.

Then, each image sample is input into the convolution neural network to perform training by using a Softmax regression function, and the trained convolution neural network is obtained.

In the step of extracting the feature of the corresponding region of each minimum circumscribed geometric frame based on the pre-configured convolution neural network, image data in each minimum circumscribed geometric frame inputting is input into the trained convolution neural network model to perform processing, and multiple features obtained from the last layer of the convolution neural network model are used as features of the corresponding regions of the minimum circumscribed geometric frames. For example, 300 dimensional features from the last layer of the convolution neural network may be extracted as image features of this image sample.

According to the careful research by the inventor of the present application, in the related art, a main method of image retrieval includes dividing an image according to a fixed ratio, extracting the feature of each region, and finally connecting the feature of each region to perform retrieval. However, due to a detection algorithm and other factors, the target object (for example, the pedestrian) in the image has position differences between images. As illustrated in FIG. 3, the horizontal line is a segmentation line with a fixed ratio. Each image is segmented into a first region, a second region and a third region from top to bottom. The first region mainly includes the head region feature of the pedestrian in the first image and the third image, but does not include the head feature of the pedestrian in the second image. This makes the image difficult to search in the image library, thereby affecting the image retrieval index seriously during the subsequent feature comparison.

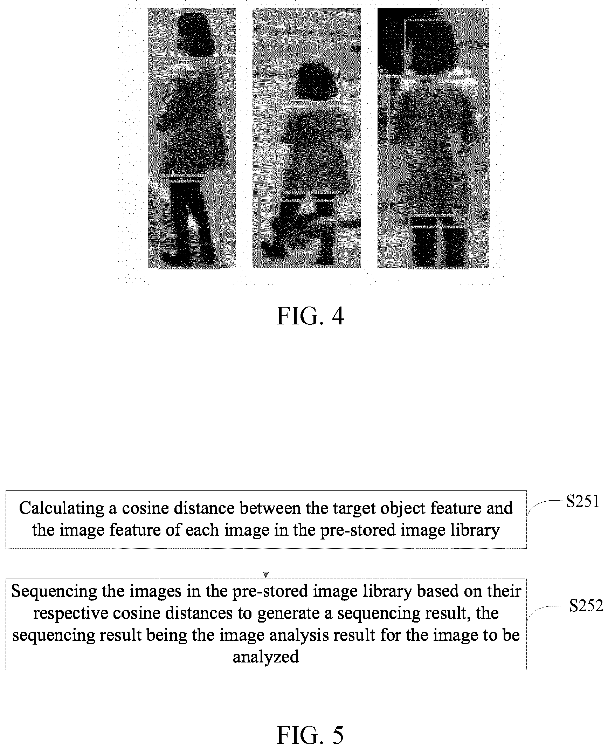

In view of the preceding problem, according to the long-term research, the inventor proposed to locate the position of each region of the target object through the following segmentation method. Specifically, as illustrated in the rectangle of FIG. 4, after the convolution neural network training, for the example in which the target object is the pedestrian, three steps are perform as follows. Firstly, individual feature extraction is performed on the head region, the upper body region and the lower body region of the pedestrian based on the convolution neural network. Then, on the basis of extracting the head region, the upper body region and the lower body region of the pedestrian, respective feature extraction is performed on the head region, the upper body region and the lower body region by using the convolution neural network. Finally, the features of the head region, the upper body region and the lower body region are connected together to obtain a multi-dimensional feature. For example, if the head region has a 100-dimensional extracted feature, the upper body region has a 100-dimensional feature, and the lower body region has a 100-dimensional feature, then a 300-dimensional feature is obtained after the connection of the head region, the upper body region and the lower body region. The 300-dimensional feature is the image feature of the target object (pedestrian). Additionally, if a certain region does not exists, for example, the lower body region does not exists in FIG. 2C, then this region has a feature of zero. Therefore, feature alignment is implemented and image retrieval accuracy may be effectively improved.

In step S250, the target object feature is compared against an image feature of each image in a pre-stored image library, and an image analysis result of the image to be analyzed is output according to a comparison result.

In this embodiment, each image in the pre-stored image library may be processed through the full convolution network and the convolution neural network to obtain the corresponding image feature of each image in the pre-stored image library.

Specifically, as an implementation, referring to FIG. 5, step S250 may be implemented through the sub-steps described below.

In sub-step S251, a cosine distance between the target object feature and the image feature of each image in the pre-stored image library is calculated.

In this embodiment, the pre-stored image library includes multiple images. After the target object feature is obtained, the target object feature is compared with the image feature of each image in the pre-stored image library. Specifically, it is feasible to calculate the respective cosine distance (also referred to as the cosine similarity) between the target object feature and the image feature of each image in the pre-stored image library and then perform the comparison based on the respective cosine distance. The specific formula is described below.

$$d\left(f_i, f_j\right) = \frac{\vec{f_i} \cdot \vec{f_j}}{\left\|f_i\right\|_2 \cdot \left\|f_j\right\|_2}$$

where $f_i$ and $f_j$ denote extracted features of images $i$ and $j$, respectively, $\|\cdot\|_2$ denotes a two norm, $d(\cdot)$ denotes the cosine distance between the target object feature and the image feature of each image in the pre-stored image library. The cosine distance is in the range of [-1, 1]. The closer the cosine distance is to 1, the more similar two features are. The closer the cosine distance is to -1, the more opposite the two features are. If the cosine distance is close to 0, the two features have a smaller correlation and there is no comparability between the two features.

Through the preceding formula, the cosine distance between the target object feature and the image feature of each image in the pre-stored image library may be calculated.

In sub-step S252, each image in the pre-stored image library is sequenced based on the respective cosine distance, and a sequencing result is generated. The sequencing result is the image analysis result of the image to be analyzed.

In this embodiment, after the cosine distance between the target object feature and the image feature of each image in the pre-stored image library is calculated, each image in the pre-stored image library may be sequenced according to the formula described below.

$$Top_n(i) = \left\{ j \mid \operatorname*{sort}_{j \in \Omega}\left(d\left(f_i, f_j\right)\right) \right\}$$

where n denotes the number of images in the sequencing result, $\Omega$ denotes the pre-stored image library, n may be set according to actual requirements. For example, if n is 3, it indicates that the final sequencing result includes images with top three cosine distances between the target object feature and the image feature of their respective images in the pre-stored image library. This may obtain a more accurate image retrieval result after corresponding features are extracted from the target object, thereby providing clues for quickly locating and searching the target object.

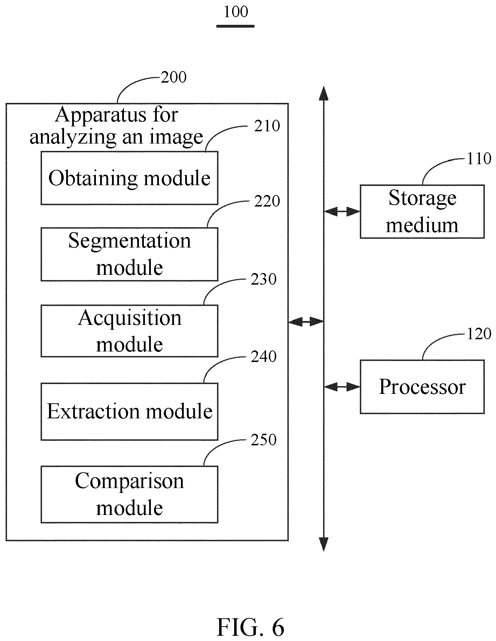

Further, as illustrated in FIG. 6, a block diagram of an electronic device 100 for performing the method of analyzing an image is provided according to an embodiment of the present application. In this embodiment, the electronic device 100 may be, but is not limited to, a personal computer (PC), a notebook computer, a monitoring device, a server and other computer devices having image analysis and processing capabilities.

The electronic device 100 may further include an apparatus for analyzing an image 200, a storage medium 110 and a processor 120. In the embodiment of the present application, the apparatus for analyzing an image 200 includes at least one software module that may be stored in the storage medium 110 in the form of software or firmware, or fixed in an operating system (OS) of the electronic device 100. The processor 120 is configured to execute executable software modules stored in the storage medium 110, for example, software function modules and computer programs included in the apparatus for analyzing an image 200. In this embodiment, the apparatus for analyzing an image 200 may be integrated into the operating system as a part of the operating system. Specifically, the apparatus for analyzing an image 200 includes an obtaining module 210, a segmentation module 220, an acquisition module 230, an extraction module 240 and a comparison module 250.

The obtaining module 210 is configured to obtain an image to be analyzed. The image to be analyzed includes a target object.

The segmentation module 220 is configured to segment the image to be analyzed based on a pre-configured full convolution network to obtain a plurality of regions of the target object. The acquisition module 230 is configured to obtain a minimum circumscribed geometric frame of each of the plurality of regions.

The extraction module 240 is configured to extract a feature of a corresponding region of each minimum circumscribed geometric frame based on a pre-configured convolution neural network, and connect the features of the corresponding regions of the minimum circumscribed geometric frames to obtain a target object feature of the target object.

The comparison module 250 is configured to compare the target object feature against an image feature of each image in a pre-stored image library, and output an image analysis result of the image to be analyzed according to a comparison result.

Optionally, in this embodiment, the apparatus for analyzing an image 200 may further include a first training module.

The first training module is configured to configure the full convolution network. The first training module is specifically configured to receive an image sample set that includes multiple image samples, label various regions of the target object in each image sample, input the multiple labelled image samples into the full convolution network to perform training, to obtain the trained full convolution network.

Optionally, in this embodiment, the apparatus for analyzing an image 200 may further include a second training module.

The second training module is configured to configure the convolution neural network. The second training module is specifically configured to receive an image sample set that includes multiple image samples, input each image sample into the convolution neural network to perform training by using a Softmax regression function, and obtain the trained convolution neural network.

Optionally, in this embodiment, the extraction module is specifically configured to input image data in each minimum circumscribed geometric frame into the trained convolution neural network model to perform processing, and use multiple features obtained from the last layer of the convolution neural network model as features of the corresponding region of each minimum circumscribed geometric frame.

Optionally, in this embodiment, the apparatus for analyzing an image 200 may further include an image-library feature processing module.

The image-library feature processing module is configured to process each image in the pre-stored image library through the full convolution network and the convolution neural network to obtain the corresponding image feature of each image in the pre-stored image library.

Optionally, in this embodiment, the acquisition module 230 is specifically configured to obtain a minimum circumscribed rectangular frame of each region, or acquire a minimum circumscribed circle of each region.

Optionally, in this embodiment, the comparison module 250 is specifically configured to calculate a cosine distance between the target object feature and the image feature of each image in the pre-stored image library, sequence the images in the pre-stored image library based on the cosine distance, and generate a sequencing result. The sequencing result is the image analysis result of the image to be analyzed.

Optionally, in this embodiment, a formula for calculating the cosine distance between the target object feature and the image feature of each image in the pre-stored image library is described below.

$$d\left(f_i, f_j\right) = \frac{\vec{f}_i \cdot \vec{f}_j}{\left\|f_i\right\|_2 \cdot \left\|f_j\right\|_2}$$

where $f_i$ and $f_j$ denote extracted features of images $i$ and $j$, respectively, $\|\cdot\|_2$ denotes a two norm. $d(\cdot)$ denotes the

cosine distance between the target object feature and the image feature of each image in the pre-stored image library.

Optionally, in this embodiment, a sequencing formula for sequencing each image in the pre-stored image library based on the cosine distance and generating the sequencing result is described below.

$$Top_n(i) = \left\{ j \mid \underset{j \in \Omega}{sort}\left(d\left(f_i, f_j\right)\right)\right\}$$

where n denotes the number of images in the sequencing result, $\Omega$ denotes the pre-stored image library.

It is to be understood that for the specific operation method of each functional module in this embodiment, refer to the detailed description of the corresponding step in the method embodiment described above, which is not repeated here.

In summary, the embodiments of the present application provide a method of analyzing an image and apparatus, an electronic device and a readable storage medium. Firstly, an image to be analyzed is obtained, where the image to be analyzed includes a target object. Then, the image to be analyzed is segmented based on a pre-configured full convolution network to obtain a plurality of regions of the target object, and a minimum circumscribed geometric frame of each region is acquired. After that, a feature of a corresponding region of each minimum circumscribed geometric frame is extracted based on a pre-configured convolution neural network, and the feature of the corresponding region of each minimum circumscribed geometric frame is connected to obtain a target object feature of the target object. Finally, the target object feature is compared against an image feature of each image in a pre-stored image library, and an image analysis result of the image to be analyzed is output according to a comparison result. This may effectively remove the environmental interference and obtain a more accurate image retrieval result, thereby providing clues for quickly locating and searching the target object.

It is to be understood that the apparatus and the method disclosed in the embodiments of the present application may be implemented in other manners. The preceding apparatus embodiment and method embodiment are merely illustrative. For example, the flowcharts and the block diagram in the drawings illustrate possible implementations of architectures, functions and operations of the system, method and computer program product according to the embodiments of the present application. In this regard, each block in the flowcharts or the block diagram may represent a module, a program segment, or part of code that contains one or more executable instructions for implementing specific logical functions. It is also to be noted that in some alternative embodiments, the functions noted in the blocks may take an order different than noted in the drawings. For example, two sequential blocks may, in fact, be executed substantially concurrently, or sometimes executed in the reverse order, which depends on the involved functions. It is also to be noted that each block of the block diagram and/or flowcharts, and combinations of blocks in the block diagram and/or flowcharts may be implemented by not only specific-purpose hardware-based systems that perform specified functions or actions, but also combinations of specific-purpose hardware and computer instructions.

Additionally, functional modules in the embodiments of the present application may be integrated together to form an independent part, or each module may exist alone, or two or more modules may be integrated to form an independent part.

It is to be noted that as used herein, term "comprise", "include" or any other variant thereof is intended to encompass a non-exclusive inclusion so that a process, method, article or device that includes a series of elements not only includes the expressly listed elements but also includes other elements that are not expressly listed or are inherent to such a process, method, article or device. In the absence of more restrictions, the elements defined by the statement "including a ..." do not exclude the presence of additional identical elements in the process, method, article or device that includes the elements.

It is apparent to those skilled in the art that the present application is not limited to the details of the preceding exemplary embodiments, and the present application may be embodied in other forms without departing from the spirit or essential features of the present application. Thus, the embodiments are illustrative and not restrictive. The scope of the present application is defined by and in the appended claims rather than by the preceding description and is therefore intended to cover all changes that fall within the meaning and scope of an equivalency of the claims. Reference numbers in the claims are not to be construed as limiting the claims.

**INDUSTRIAL APPLICABILITY**

Provided are a method and apparatus for analyzing an image, an electronic device and a readable storage medium. Firstly, an image to be analyzed is obtained, the image including a target object. Then, the image to be analyzed is segmented based on a pre-configured full convolution network to obtain a plurality of regions of the target object, and a minimum circumscribed geometric frame of each region is obtained. After that, a feature of a corresponding region of each minimum circumscribed geometric frame is extracted based on a pre-configured convolution neural network, and the features of the corresponding regions of the minimum circumscribed geometric frames are connected to obtain a target object feature of the target object. Finally, the target object feature is compared against an image feature of each image in a pre-stored image library, and an image analysis result of the image to be analyzed is output according to a comparison result. This may effectively remove the environmental interference and obtain a more accurate image retrieval result, thereby providing clues for quickly locating and searching the target object.

## Claims

1. A method of analyzing an image, applied to an electronic device, the method comprising:

   obtaining an image to be analyzed, the image comprising a target object;
   segmenting the image based on a pre-configured full convolution network to obtain a plurality of regions of the target object;
   obtaining a minimum circumscribed geometric frame of each of the plurality of regions;
   extracting a feature of a corresponding region of each minimum circumscribed geometric frame based on a pre-configured convolution neural network, and connecting the features of the corresponding regions of the minimum circumscribed geometric frames to obtain a target object feature of the target object; and
   comparing the target object feature against an image feature of each image in a pre-stored image library, and outputting an image analysis result for the image to be analyzed according to a comparison result.

2. The method as recited in claim 1, further comprising, prior to obtaining the image to be analyzed:
   configuring the full convolution network, by:

   receiving an image sample set, the image sample set comprising a plurality of image samples; and
   labelling a plurality of regions of a target object in each of the plurality of image samples, inputting labelled image samples into the full convolution network for training, to obtain the trained full convolution network.

3. The method as recited in claim 1, further comprising, prior to obtaining the image to be analyzed:
   configuring the convolution neural network, by:

   receiving an image sample set, the image sample set comprising a plurality of image samples; and
   inputting each of the plurality of image samples into the convolution neural network for training by using a Softmax regression function, to obtain the trained convolution neural network.

4. The method as recited in claim 3, wherein extracting the feature of the corresponding region of each minimum circumscribed geometric frame based on the pre-configured convolution neural network comprises:
   inputting image data in each minimum circumscribed geometric frame into the trained convolution neural network model for processing, and using a plurality of features obtained from a last layer of the convolution neural network model as the features of the corresponding regions of the minimum circumscribed geometric frames.

5. The method recited in claim 1, further comprising:
   processing each image in the pre-stored image library through the full convolution network and the convolution neural network to obtain the corresponding image feature of each image in the pre-stored image library.

6. The method as recited in claim 1, wherein obtaining the minimum circumscribed geometric frame of each of the plurality of regions comprises:

   obtaining a minimum circumscribed rectangular frame of each of the plurality of regions; or
   obtaining a minimum circumscribed circle of each of the plurality of regions.

7. The method as recited in any one of claims 1 to 6, wherein comparing the target object feature against the image feature of each image in the pre-stored image library and outputting the image analysis result for the image to be analyzed according to the comparison result comprises:

   calculating a cosine distance between the target object feature and the image feature of each image in the pre-stored image library; and
   sequencing the images in the pre-stored image library based on their respective cosine distances to generate a sequencing result, the sequencing result being the image analysis result for the image to be analyzed.

8. The method as recited in claim 7, wherein the cosine distance between the target object feature and the image feature of each image in the pre-stored image library is calculated by the following formula:

$$d\left(f_i, f_j\right) = \frac{\vec{f_i} \cdot \vec{f_j}}{\left\|f_i\right\|_2 \cdot \left\|f_j\right\|_2}$$

wherein $f_i$ and $f_j$ denote a feature extracted of image $i$ and a feature extracted of image $j$, respectively, $\|\cdot\|_2$ denotes a two norm, and $d(\cdot)$ denotes the cosine distance between the target object feature and the image feature of each image in the pre-stored image library.

9. The method as recited in claim 7, wherein sequencing the images in the pre-stored image library based on their respective cosine distances to generate the sequencing result is performed using the following sequencing formula:

$$Top_n(i) = \left\{ j \,|\, \underset{j \in \Omega}{sort}\big(d(f_i, f_j)\big) \right\}$$ wherein

$n$ denotes a number of images in the sequencing result, and $\Omega$ denotes the pre-stored image library.

10. An apparatus for analyzing an image, applied to an electronic device, the apparatus comprising:

an obtaining module, configured to obtain an image to be analyzed, the image to be analyzed comprising a target object;

a segmentation module, configured to segment the image to be analyzed based on a pre-configured full convolution network to obtain a plurality of regions of the target object;

an acquisition module, configured to obtain a minimum circumscribed geometric frame of each of the plurality of regions;

an extraction module, configured to extract a feature of a corresponding region of each minimum circumscribed geometric frame based on a pre-configured convolution neural network, and connect the features of the corresponding regions of the minimum circumscribed geometric frames to obtain a target object feature of the target object; and

a comparison module, configured to compare the target object feature against an image feature of each image in a pre-stored image library, and output an image analysis result for the image to be analyzed according to a comparison result.

11. The apparatus as recited in claim 10, further comprising:
a first training module, configured to configure the full convolution network, by:

receiving an image sample set that comprises a plurality of image samples, labelling a plurality of regions of a target object in each of the plurality of image samples; and
inputting the labelled image samples into the full convolution network for training, to obtain a trained full convolution network.

12. The apparatus as recited in claim 10, further comprising:
a second training module, configured to configure the convolution neural network, by:

receiving an image sample set that comprises a plurality of image samples; and
inputting each of the plurality of image samples into the convolution neural network for training by using a Softmax regression function, to obtain a trained convolution neural network.

13. The apparatus as recited in claim 12, wherein the extraction module is configured to input image data in each minimum circumscribed geometric frame into the trained convolution neural network for processing, and use a plurality of features obtained from a last layer of the convolution neural network model as the features of the corresponding regions of the minimum circumscribed geometric frames.

14. The apparatus as recited in claim 10, further comprising:
an image-library feature processing module, configured to process each image in the pre-stored image library through the full convolution network and the convolution neural network to obtain the corresponding image feature of each image in the pre-stored image library.

15. The apparatus as recited in claim 10, wherein the acquisition module is configured to obtain a minimum circumscribed rectangular frame of each of the plurality of regions, or obtain a minimum circumscribed circle of each of the plurality of regions.

16. The apparatus as recited in any one of claims 10 to 15, wherein the comparison module is configured to calculate a cosine distance between the target object feature and the image feature of each image in the pre-stored image library, sequence the images in the pre-stored image library based on their respective cosine distances to generate a sequencing result, the sequencing result being the image analysis result for the image to be analyzed.

17. The apparatus as recited in claim 16, wherein the cosine distance between the target object feature and the image feature of each image in the pre-stored image library is calculated by the following formula:

$$d(f_i, f_j) = \frac{\vec{f_i} \cdot \vec{f_j}}{\|f_i\|_2 \cdot \|f_j\|_2}$$

wherein $f_i$ and $f_j$ denote a feature extracted of image $i$ and a feature extracted of image $j$, respectively, $\|\cdot\|_2$ denotes a two norm, and $d(\cdot)$ denotes the cosine distance between the target object feature and the image feature of each image in the pre-stored image library.

18. The apparatus as recited in claim 16, wherein sequencing the images in the pre-stored image library based on their respective cosine distances to generate the sequencing result is performed using the following sequencing formula:

$$Top_n(i) = \left\{ j \mid \underset{j \in \Omega}{sort}\big(d(f_i, f_j)\big) \right\} \quad \text{wherein}$$

$n$ denotes a number of images in the sequencing result, and $\Omega$ denotes the pre-stored image library.

19. An electronic device, comprising:

a storage medium;
a processor; and
an apparatus for analyzing an image, the apparatus being resultstored in the storage medium and comprising software functional modules executable by the processor, the apparatus comprising:

an obtaining module, configured to obtain an image to be analyzed, the image comprising a target object;
a segmentation module, configured to segment the image to be analyzed based on a pre-configured full convolution network to obtain a plurality of regions of the target object;
an acquisition module, configured to obtain a minimum circumscribed geometric frame of each of the plurality of regions;
an extraction module, configured to extract a feature of a corresponding region of each minimum circumscribed geometric frame based on a pre-configured convolution neural network, and connect the features of the corresponding regions of the minimum circumscribed geometric frames to obtain a target object feature of the target object; and
a comparison module, configured to compare the target object feature against an image feature of each image in a pre-stored image library, and output an image analysis result for the image to be analyzed according to a comparison.

20. A readable storage medium, storing a computer program that when executed causes the method of analyzing an image as recited in any one of claims 1 to 9 to be performed.

Start

Obtaining an image to be analyzed — S210

Segmenting the image to be analyzed based on a pre-configured full convolution network to obtain multiple regions of the target object — S220

Obtaining a minimum circumscribed geometric frame of each of the multiple regions — S230

Extracting a feature of a corresponding region of each minimum circumscribed geometric frame based on a pre-configured convolution neural network, and connecting the features of the corresponding regions of the minimum circumscribed geometric frames to obtain a target object feature of the target object — S240

Comparing the target object feature against an image feature of each image in a pre-stored image library, and outputting an image analysis result for the image to be analyzed according to a comparison result — S250

End

FIG. 1

(a)

(b)                    (c)

FIG. 2

FIG. 3

FIG. 4

Calculating a cosine distance between the target object feature and the image feature of each image in the pre-stored image library — S251

Sequencing the images in the pre-stored image library based on their respective cosine distances to generate a sequencing result, the sequencing result being the image analysis result for the image to be analyzed — S252

FIG. 5

100

200

Apparatus for
analyzing an image ⌐ 210

Obtaining module

⌐ 220

Segmentation
module

⌐ 230

Acquisition
module

⌐ 240

Extraction module

⌐ 250

Comparison
module

⌐ 110

Storage
medium

⌐ 120

Processor

FIG. 6

## INTERNATIONAL SEARCH REPORT

| International application No. |
| --- |
| **PCT/CN2018/100249** |

| A. | CLASSIFICATION OF SUBJECT MATTER |
| --- | --- |

G06K 9/00(2006.01)i

According to International Patent Classification (IPC) or to both national classification and IPC

| B. | FIELDS SEARCHED |
| --- | --- |

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI: 图像, 神经网络, 全卷积网络, 区域, 边框, 外接框, 轮廓, 训练, 边界, 限位, 矩形, 环境, 遮挡; image, picture, neural network, CNN, FCN, region, area, range, frame, profile, training, boundary, limit, rectangle, environment, shelter

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 106874894 A (UNIVERSITY OF ELECTRONIC SCIENCE AND TECHNOLOGY OF CHINA) 20 June 2017 (2017-06-20) entire document | 1-20 |
| A | CN 106355188 A (ALIBABA GROUP HOLDING LIMITED) 25 January 2017 (2017-01-25) entire document | 1-20 |
| A | WO 2017101036 A1 (INTEL CORP.) 22 June 2017 (2017-06-22) entire document | 1-20 |

☐ Further documents are listed in the continuation of Box C.　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **01 November 2018** | **13 November 2018** |

| Name and mailing address of the ISA/CN | Authorized officer |
| --- | --- |
| **State Intellectual Property Office of the P. R. China (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/100249**

| Patent document cited in search report | | | Publication date (day/month/year) | Patent family member(s) | | | Publication date (day/month/year) |
|---|---|---|---|---|---|---|---|
| CN | 106874894 | A | 20 June 2017 | None | | | |
| CN | 106355188 | A | 25 January 2017 | None | | | |
| WO | 2017101036 | A1 | 22 June 2017 | US | 2018018524 | A1 | 18 January 2018 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201711428999X